(19) Europäisches Patentamt / European Patent Office / Office européen des brevets

(11) **EP 3 889 696 B1**

(12) **EUROPEAN PATENT SPECIFICATION**

(45) Date of publication and mention
of the grant of the patent:
**16.08.2023 Bulletin 2023/33**

(21) Application number: **20167606.1**

(22) Date of filing: **01.04.2020**

(51) International Patent Classification (IPC):
**G05B 13/04** $^{(2006.01)}$

(52) Cooperative Patent Classification (CPC):
**G05B 13/048**

(54) **A MODEL PREDICTIVE CONTROL METHOD FOR AN INDUSTRIAL BOILER AND RELATING BOILER STRUCTURE**

MODELLVORHERSAGESTEUERUNGSVERFAHREN FÜR EINEN INDUSTRIEKESSEL UND ZUGEHÖRIGE KESSELSTRUKTUR

PROCÉDÉ DE COMMANDE PRÉDICTIVE DE MODÈLE POUR UNE CHAUDIÈRE INDUSTRIELLE ET STRUCTURE DE CHAUDIÈRE ASSOCIÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.10.2021 Bulletin 2021/40**

(73) Proprietor: **Bono Energia S.p.A.**
**20068 Peschiera Borromeo (MI) (IT)**

(72) Inventors:
• **VOLPATO, Marco**
**20068 Peschiera Borromeo (IT)**
• **LANDI, Antonio**
**20068 Peschiera Borromeo (IT)**

• **CORTI, Maurizio**
**20068 Peschiera Borromeo (IT)**
• **FERRARINI, Luca**
**20133 Milano (IT)**
• **BABINI, Riccardo**
**20133 Milano (IT)**

(74) Representative: **Botti & Ferrari S.p.A.**
**Via Cappellini, 11**
**20124 Milano (IT)**

(56) References cited:
WO-A1-2015/092145       US-A1- 2009 198 350
US-A1- 2016 209 031       US-A1- 2018 031 228

**Description**

Technical field

The present invention relates to a model predictive control (MPC) method for an industrial boiler and to a boiler structured for operating according to such a method.

As it is well known in this specific technical field, a boiler is a critical component in power systems because steam mass rate, steam temperature and steam pressure affect to performance of the boiler itself and of the process components downstream.

Although steam production setpoint is varied during operation, outputs of boiler, which are water level, drum pressure and stream temperature, must be controlled at desired level.

Common controllers used in industry are so-called PID (Proportional Integral Derivative) controllers.

In more general terms a PID controller is a control loop feedback mechanism widely used in industrial control systems and in a variety of other applications requiring continuously modulating control.

A PID controller continuously calculates an error value as a difference between a desired setpoint (SP) and a measured process variable (PV) and applies a correction based on proportional, integral, and derivative terms.

In practical terms a PID controller automatically applies accurate and responsive correction to a control signal. It has a simple structure and many tuning methods are available.

However, PID control is rather limited to single-input single-output processes. Moreover, it is well-known that the performances obtainable with a PID control strategy are limited and far from what an optimal control system can offer.

For steam production of an industrial boiler the boiler outputs must be controlled at desired levels and optimal control system is needed.

Prior art

For multivariable systems such as the industrial boilers the design of PID control is very complicated.

In this respect, it has been proposed to adopt an MPC (Model Predictive Control) method to improve the performance of boiler while maintaining the control inputs, outputs and states within constraints.

For instance, a prior art solution has been disclosed in the Article by Pongsorn Keadtipod and David Banjerdpongchai concerning "Design of Supervisory Cascade Model Predictive Control for Industrial Boilers", disclosed in Taiwan in November 2016.

That paper aimed to improve the performance of a boiler by applying cascade model predictive control to multiple control loops including water level, drum pressure and steam temperature.

However, the theory exposed in that article cannot be applied with profit to a wide range of industrial boilers. In fact, that theory has been developed and fitted over a simulated model only, thus lacking of a realistic implementation strategy over any kind of industrial boiler.

Another solution has been disclosed in the US patent application No. US 2016/0320058 A1 relating to a method and apparatus for controlling combustion in a furnace.

This document relates to a BioGrate boiler wherein an MPC model is used to compensate the main disturbances caused by variation in fuel quality such as the moisture content of fuel as well as variations in fuel flow. Event this solution is limited to the fuel variations and does not take in due consideration other variables involved in the steam production. Further relevant prior art is provided by the patent document US 2016/209031 A1.

The technical problem at the basis of the present invention is that of providing a method and a corresponding boiler apparatus having respective functional and structural features allowing to perfectly control the steam production of the industrial boiler keeping multiple variables under strict control.

Another aim of the present invention is that of providing an industrial boiler having structural and functional features allowing to be controlled in an easy and simple manner without modifying a possible PID control structure already installed on the industrial boiler.

A further aim of the invention is that of providing a control method that could be cost effective and applicable to existing plants including industrial boilers.

Summary of the invention

The solution idea at the basis of the present invention focuses on the adoption of a system including a cascade of controllers, including at least an MPC controller, active on at least a couple of boiler output variables such as the fluid level and the steam pressure.

Advantageously, according to the invention the control of the pressure variable and of the fluid level is performed by the MPC controller.

A first embodiment of the present disclosure relates to an MPC control method for an industrial boiler wherein at least a couple of variable parameters are controlled through a supervisory cascade MPC control architecture for optimizing the boiler operation, for instance the level L of the fluid sensed by level sensors to be heated in the boiler and the value of the steam pressure P produced by the boiler and sensed by pressure sensors, said MPC control being applied on the pressure value P through a custom estimation algorithm to tackle a quantization phenomenon affecting the pressure sensors.

The custom estimation relies on a backwards linear interpolation triggered by any change on the measured pressure value.

Said MPC control architecture is provided upstream of a couple of PI controllers, one for the pressure control and one for the fluid level control.

Moreover, the MPC control architecture is implemented by an MPC block receiving as input at least the feedback value of the steam pressure.

This MPC block receives as a further input at least the feedback value of the fluid level.

The MPC block receives also as inputs a plurality of measurable disturbances of the boiler.

The MPC block performs an estimation of the states of the controlled dynamic process by a Kalman Filter. Such an estimation based on said Kalman Filter is applied to fluid level-side of the boiler.

It must be noted that the MPC control applied on pressure-side is characterized by a peculiar cost function having as sole objective the imposition of a particular profile for the fuel mass flow given by the following equation:

$$J(z_k) = \sum_{i=1}^{p}\left\{\dot{m}_{fuel}(k+i|k) - \dot{m}_{fuel,REF}(k+i)\right\}^2$$

Where $\dot{m}_{fuel}$ is the derivative value of the fuel mass flow.

A further embodiment of the present invention relates to an industrial boiler for producing steam at a measurable pressure from a fluid to be heated, including:

- at least a pressure sensor;

- at least a fluid level sensor;

an electronic controller structured and programmed to implement the MPC control method previously mentioned.

The industrial boiler of the invention is so structured that said MPC architecture is provided upstream of a couple of PI controllers one for the pressure control and one for the fluid level control.

Features and advantages of the inventive method and boiler will be disclosed with reference to the enclosed drawings relating to an indicative and a non-limiting implementation example.

Brief description of the drawings

- Figure 1 shows a schematic view of a furnace for heating a water fluid and operating according to the principle of a known method disclosed in the above-mention prior art Article;

- Figure 2 shows a schematic view of a possible structure of a supervisory cascade control applied to the furnace boiler of Figure 1;

- Figure 3 shows a schematic view of a generic MPC controller;

- Figure 4 shows a schematic view of a hybrid MPC-PID control architecture installed on an industrial boiler according to the present invention;

- Figure 5 is a schematic diagram showing the variation of the pressure parameters versus time in a boiler to which the inventive method is applied;

- Figure 6 is a more detailed block diagram schematic view of the hybrid MPC-PID control scheme of the invention.

Detailed description

With reference to the drawing figures and according to the present invention it will be disclosed hereinafter a method for controlling in an optimized manner at least a couple of variable parameters in an industrial boiler.

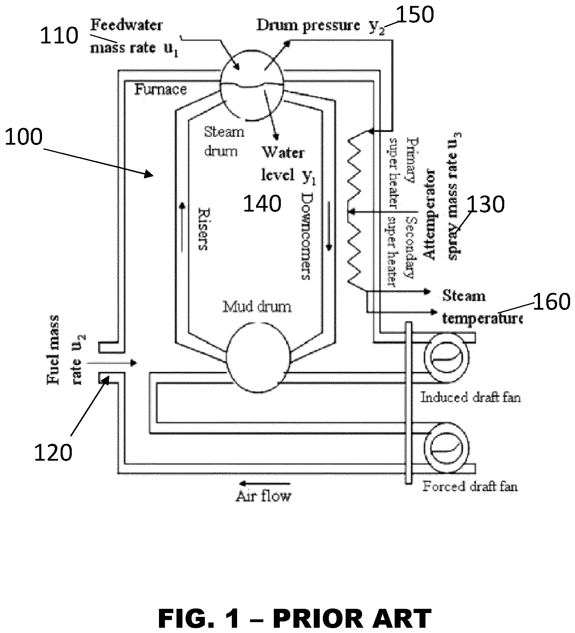

The boiler to which the invention is applied is shown only schematically in Figure 1 and may be considered a conventional furnace wherein a fluid is heated to produce a steam flow.

According to the invention, the control method is focused on a couple of operating parameters: the steam pressure P and level L of the fluid inside the boiler.

The boiler is provided with at least a pressure sensor and at least a fluid level sensor, not shown in the drawing being of a convention kind.

However, the boiler is provided with an electronic controller structured to implement an MPC control method of the present disclosure.

We will first consider the schematic view of the furnace boiler shown in Figure 1 and comprising a tube boiler containing water. Considering the boiler as a system, it may be appreciated that the water fluid tube boiler 100 of Figure 1 has multiple inputs.

A first input 110 is the feedwater mass rate, a second input is the fuel mass rate 120 while a third input is represented by the attemperator spray mass rate 130.

The boiler 100 has multiple outputs, namely: the water level, the drum pressure 150 and the steam temperature 160.

The control inputs are represented by manipulated variables, while process outputs are indicated and defined in the following Table 1 under the label: process variables.

| **Control Inputs** |
| --- |
| $u_1$ Feedwater mass rate (kg/s) |
| $u_2$ Fuel mass rate (kg/s) |
| $u_3$ Attemperator spray mass rate (kg/s) |
| **Process Outputs** |
| $y_1$ Water level (m.) |
| $y_2$ Drum pressure (MPa.) |
| $y_3$ Stream temperature (°C) |

In general terms, the above defined boiler system may be disclosed though a dynamic model wherein the inputs and outputs from the boiler are applied to system identification algorithm.

The dynamic model obtained by the identification algorithm can be implemented in an MPC control architecture.

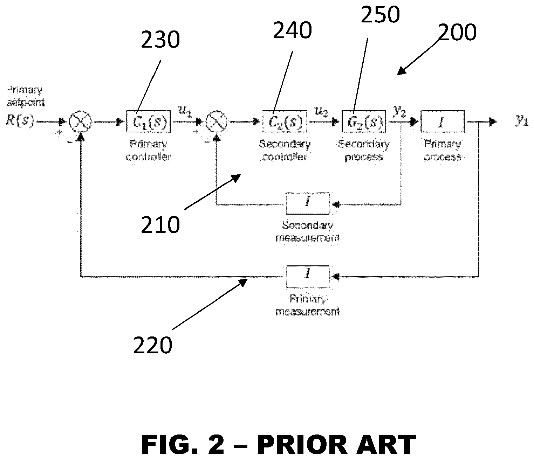

In this respect, Figure 2 shows a schematic view of a possible structure of a supervisory cascade control applied to the furnace boiler of Figure 1.

The supervisory cascade control 200 of Figure 2 is structured with two or more controllers. The reported example includes two control loops, an inner control loop 210 and an outer control loop 220.

The architecture of supervisory cascade control 200 includes a primary controller 230 representing the MPC controller and a secondary controller 240 representing a PI controller.

The block 250 is indicative of the boiler process $G_2(s)$.

As it is known in this technical field, the PI controller may be represented by a general state space equation while the inner control loop 210 is used to form an augmented model in order to design supervisory MPC.

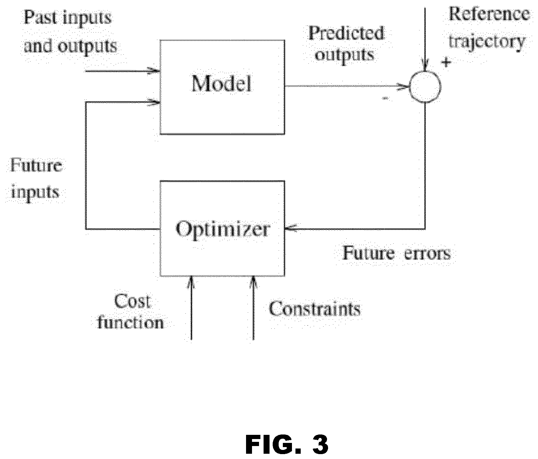

Focusing now our attention on the primary controller 230 representing the MPC controller, we may refer to the example of Figure 3 to understand the principle of an MPC controller.

The principle of the MPC controller is that of finding the control signal which provides the output response close to a reference signal by solving an optimization problem.

The cost function has a specific equation, while the constraints of control inputs are based on physical limitation of operation.

The above-reported architecture of supervisory cascade MPC control gives a faster response if compared by a simple PI or a simple MPC controller.

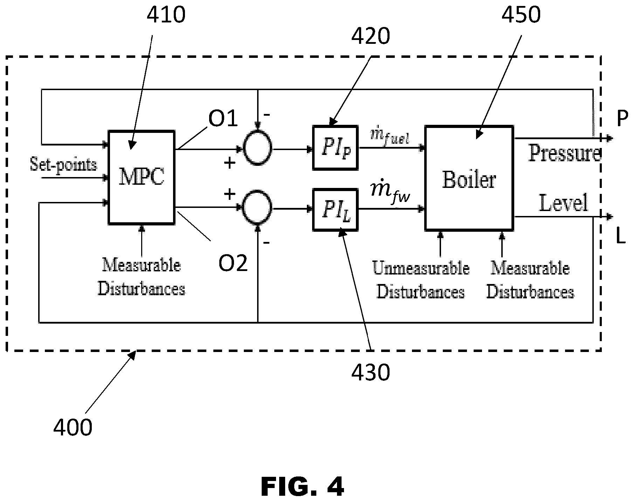

Now, in line with the previous disclosure, the present invention relates to an application of a supervisory cascade MPC control to an industrial boiler schematically shown in Figure 4 with the number 450.

The boiler 450 may be considered a conventional furnace heating a fluid and affected by measurable disturbances, that will be later considered, as well as by unmeasurable disturbances that will not be further disclosed. Figure 4 shows schematically the overall MPC control architecture 400 of the present invention.

The MPC block 410 represents an advanced control technique based on an estimation algorithm later disclosed.

First of all, it should be noted that the output variables under control with the method of the present invention are the boiler pressure P of the produced steam and the boiler level L of the fluid to be heated.

Briefly, the control architecture 400 performs an on-line optimization of a user-defined cost function.

Thanks to the chosen architecture different control objectives can be expressed by a mathematical function relying on a dynamic model of the controlled process.

Moreover, the MPC block 410 can rely on an estimation of the states of the controlled dynamic process. This estimation is performed by a Kalman Filter, even if other estimation technique may be adopted.

More particularly, the MPC block 410 exploits this estimation based on said Kalman Filter for the level-side L of the boiler, meaning the output variable L for the boiler level of the fluid to be heated.

Advantageously, according to the present invention, a customised estimation algorithm is applied on the pressure-side P so to tackle the quantization phenomenon affecting the pressure sensors.

In other words, the MPC control method of the present invention is applied to an industrial boiler wherein at least a couple of variable parameters are controlled through a supervisory cascade MPC control for optimizing the boiler operation. The two variable Output parameters are the level L of the fluid to be heated in the boiler and the value of the steam pressure P produced by the boiler and sensed by pressure sensors.

The MPC control is applied on the pressure value P through a customised estimation algorithm to tackle a quantization phenomenon affecting the pressure sensors.

A more detailed explanation of the control method is disclosed in the following lines.

In the recent past, the sophisticated nature of the MPC control quickly adopted by the industrial world has provided some difficulties to be managed notwithstanding the initial promised advantages.

On the contrary the MPC-based control of the present invention has been developed to ease as much as possible its integration on the real boiler systems.

The MPC control block 410 is provided upstream of a couple of PI controllers 420 and 430, one for the pressure control and one for the level control.

More particularly, the output pressure value P is feedback applied to one input of the MPC control block 410.

Similarly, the output fluid level L is feedback applied to another input of the MPC control block 410.

A further input of the MPC control block 410 is represented by a plurality of set-point values.

The MPC block 410 produces at least a couple of outputs. A first output O1 is dedicated to the predictive pressure control and is applied to an adding node receiving also the feedback output pressure value P.

A second output O2 is dedicated to the predictive fluid level control and is applied to an adding node receiving also the feedback output fluid level L.

The respective outputs of the adding nodes are applied to the corresponding PI controllers 420 and 430.

The first PI controller is a decentralized controller for the pressure control, while the second PI controller is a decentralized controller for fluid level control.

Therefore, it may be appreciated that the MPC control block 410 is installed upstream of the pre-existing typical control structure, i.e. the couple of decentralized PI controllers 420 and 430.

The output of the first PI controller 420 is a value $\dot{m}_{fuel}$ representing a command for driving the fuel mass flow inside the boiler.

The output of the second PI controller 430 is a value $\dot{m}_{fw}$ representing a command for driving the feedwater inside the boiler.

In this manner, it is possible to keep the possible existing and already installed PI controllers in their original position.

In other words, it has been applied an MPC control on an existing structure including old PI controllers thus avoiding any substitution of one controller with another. A possible substitution of this kind could be detrimental and could have an unbearable impact for an industrial context.

Therefore, the architecture 400 shown in Figure 4 may be considered a hybrid MPC-PID control structure.

Differently from the prior art solution, the architecture of the present invention separates the variables on which the predictive control can be applied. The result of this solution is a hybrid MPC-PID control architecture of a peculiar simplicity.

The dynamic model implemented in the MPC controller 410 has been developed so to maximize its simplicity. This model envisages just one boiler parameter at a time on the pressure side and one on the level side.

It must be noted that the MPC block 410 can receive also as inputs a plurality of measurable disturbances that must be taken in consideration for a more precise predictable estimation. For instance, one of those measurable disturbances is represented by the steam flow.

The model has been verified in the premises of the Applicant and it has been found suitable for the boiler control purposes. The simplicity of such a model can represent an enormous advantage in an implementation phase.

The impact of the control action of the hybrid MPC-PID MPC controller of the invention can be decided through a simple parameter $k \in [0;1]$.

More specifically, the k parameter is used by the MPC only on the pressure branch. As to the level branch, another parameter WL is used. This last parameter has an impact on the MPC operation of the level branch.

Therefore, we may consider the presence of two independent parameters kp e kl having a similar excursion; that is to say:

- a "1" logic value would completely deactivate the MPC (thus letting the PID controller/s to work alone), while

- a "0" logic value would let the MPC block to have full control of the plant.

For completeness of disclosure it should be remarked that the model of the pressure-side boiler process is represented by the following formula:

$$\dot{P} = IG_P * \dot{m}_{fuel} - IG_P * d_P$$

Where $IG_p$ is the only boiler-related parameter, describing the impact of a fuel mass flow change on the pressure derivative.

Any kind of disturbance impacting on the boiler pressure is represented by the unmeasured variable $d_P$.

A similar model is exploited for the level-side boiler process:

$$\dot{L} = IG_L * \dot{m}_{fw} - IG_L * d_L$$

The level-side MPC cost function captures two traditional "objectives":

• Imposing a specific set-point to the drum measured water level;

• Maintaining the imposed level set-point - i.e. the level set-point computed by the MPC and transmitted to the level PI controller - close to the "real" level set-point - i.e. the desired level set-point imposed by the operator.

The mathematical formulation of these objectives is expressed in the following equation:

$$J(z_k) = \sum_{i=1}^{p} \left\{ w^y \left[ Sp_{L,REAL}(k) - L(k+i|k) \right] \right\}^2 +$$

$$+ \sum_{i=0}^{p-1} \left\{ w^u \left[ Sp_{L,REAL}(k) - Sp_{L,MPC}(k+i|k) \right] \right\}^2$$

The level-side state estimation is performed through a Kalman Filter. As an alternative, a possible different estimation filter may be adopted.

The pressure-side MPC is characterized by an unusual cost function defined by the user of the boiler.

In this cost function, the only objective is the imposition of a particular profile for the fuel mass flow, for instance:

$$J(z_k) = \sum_{i=1}^{p} \left\{ \dot{m}(k+i|k) - \dot{m}_{fuel,REF}(k+i) \right\}^2$$

This fuel mass flow profile is computed by exploiting a particular estimation algorithm that will be disclosed hereinafter.

A study performed by the Applicant has considered a quantization phenomenon acting on the pressure sensor.

These studies have concluded that the quantization phenomenon may negatively affect the measure of the pressure parameter P.

In fact, the cause of two main drops in the pressure control performances can be traced back to the quantization phenomenon itself. In particular, the quantization phenomenon reduces the stability of the steam pressure during a stationary state, i.e. when the disturbances acting on the boiler are constant and the system is expected to reach a fixed equilibrium. Moreover, the information on a possible pressure change caused by the action of a disturbance on the boiler is delayed, denying the pressure PID controller the possibility of an optimal corrective action.

The estimation algorithm proposed by the invention may be applied when a useful information on the pressure can be detected or when a pressure variation is measured.

However, the above-mentioned studies have also revealed that when the pressure sensor is outputting a constant value, there is no way to measure how the pressure is really behaving, since its real measure is hidden behind the quantization phenomenon.

From this assumption and relying on the aforementioned simplified pressure-side model, a customized event-based estimation algorithm has been developed.

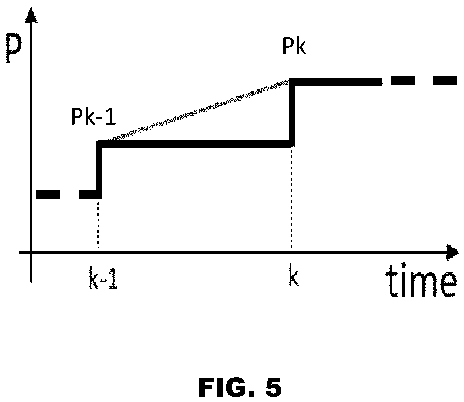

Firstly, this estimation relies on a backwards linear interpolation triggered by any change on the measured pressure value P, as represented by the Figure 5.

As it may be appreciated, the diagram reports the variation of the pressure P versus time. At the instant k-1 there is a first step keeping stable the pressure value P for a period of time defined by the interval [k-1, k].

A second raising in the pressure value P at the subsequent instant k brings the pressure level to a new stable step.

A possible interpolation between the two steps may allow to estimate the raising of the pressure in a predetermined time interval.

This interpolation will constitute the pressure estimation P during that past time interval.

Along with a constantly updated measurement of the average fuel injected in the boiler system during the interval [k-1, k], it is possible to estimate the disturbance $d_p$ with the following formula:

$$\widehat{d_P} = \dot{m}_{fuel,AVERAGE} - \frac{\hat{P}}{IG_P}$$

Considering the MPC control model of the present invention, it is possible to see that the value of the disturbance $d_p$ coincides with the value of fuel mass flow needed to stabilize the pressure, i.e. to have a constant pressure.

This estimation can then be used to produce an optimal fuel mass flow trend. This fuel mass flow trend is fed to the MPC controller, which in turn manipulates the pressure set-point so to obtain the desired fuel mass flow trend.

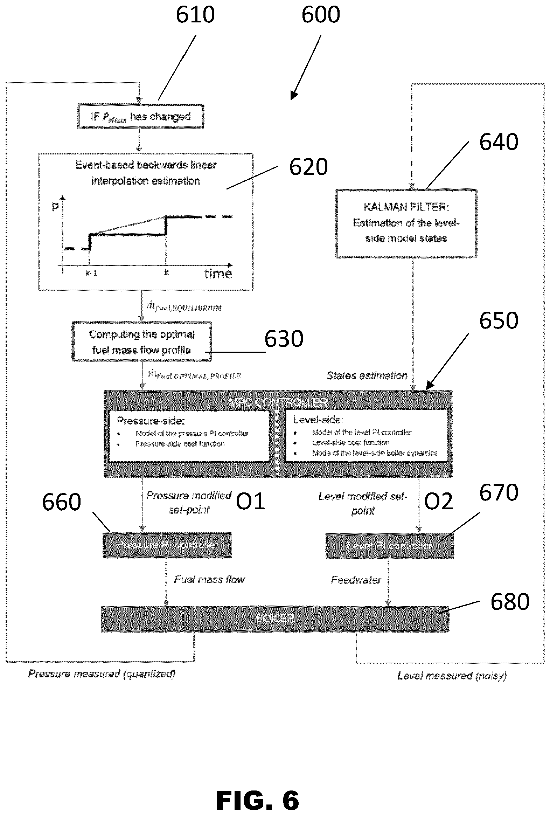

A symbolic flow diagram is presented in Figure 6 highlighting the different phases concerning the pressure-side MPC functioning.

Figure 6 shows in more details and in a block diagram 600 the phases of the method of the present disclosure.

The left side of the block diagram is dedicated to the measure and control of the steam pressure P while the right side of the block diagram is dedicated to the measure and control of the level L of the fluid to be heated in the boiler 680.

Focusing the attention on the left side of the block diagram, it may be appreciated that a block 610 is dedicated to the measure of the pressure value $P_{meas}$.

If the pressure value is changed, then the method proceeds in block 620 through an evaluation of the pressure raising based on a linear interpolation, as previously illustrated with reference to Figure 5.

The result of this interpolation is used for computing the optimal fuel mass flow profile in block 630. Then, in block 650, the MPC controller takes care in issuing a first output O1 to be applied to a pressure controller 660 and obtained on the predictive model of the pressure value of the MPC controller.

The pressure controller 660 is active on the boiler 680 regulating the fuel mass flow.

Similarly, on the right side of the block diagram 600, the fluid level is measured and applied in block 640 to a Kalman filter estimating the status of the fluid level. This value is fed to the MPC controller 650 that takes care in issuing a second output O2 to be applied to a level controller 670. This second output O2 is obtained on the predictive model of the level value of the MPC controller.

The level controller 670 is active on the boiler 680 regulating the feedwater supplied to the boiler 680.

A skilled person in this art will understand from the previous disclosure that the supervisory cascade MPC control system and method of the present invention may be implemented in a relatively easy way in already installed industrial boilers.

The studies performed by the Applicant have allowed to obtain simulated output responses for comparing the performances of the MPC control method of the present invention with the known solutions including just a standalone MPC.

These results show that supervisory cascade MPC gives superior output performance.

Moreover, when considering input constraints, it has been demonstrated that the inventive method allows performing advanced control strategies with respect to conventional controllers.

The advantages of supervisory cascade MPC control method of the present invention are summarized by:

- the facility to implement to MPC architecture on an already installed controller;

- the possibility to apply the method to control a variety of processes.

No measurable disturb is used and this is a further advantage.

The fact that the control can be performed avoiding the burden of measuring further possible disturbances sources allows obtaining a simpler and more economic control algorithm.

Moreover, several different algorithms of MPC may be adopted according to the user's needs, in particular to minimize the cost function.

Further advantages are given by the minimization of disturbances on pressure and fluid level; the improvement of the pressure stability in the steady state and the reduction of the feedwater solicitation.

Virtually any desired behaviour concerning the aforementioned boiler variables can be imposed in the MPC cost function. In this way, the installed MPC is able to serve multiple control objectives at once while preserving its ease of implementation in an industrial context.

**Claims**

1. An MPC control method for an industrial boiler (680) wherein at least a couple of variable output parameters (P, L) are controlled through a supervisory cascade MPC control architecture (400) for optimizing the boiler operation, at least the level (L) sensed by level sensor of the fluid to be heated in the boiler and the value of the steam pressure (P) produced by the boiler 680 (450) and sensed by pressure sensors, wherein said MPC control architecture (400) is provided upstream of a couple of PI controllers (420, 430), one for the pressure (P) control and one for the fluid level (L) control; wherein said MPC control architecture (400) is implemented by an MPC block (410) receiving as input at least the feedback value of the steam pressure (P); wherein said MPC control architecture (400) is implemented by an MPC block (410) receiving as input at least the feedback value of the steam pressure (P); wherein said MPC block (410) receives as a further input at least the feedback value of the fluid level (L); and wherein said MPC control architecture provides at least a first output (O1) dedicated to the predictive pressure control level and at least a second output (O2) dedicated to the predictive fluid level control.

2. The method of claim 1 wherein said MPC control is applied on the pressure value (P) through a customised estimation algorithm to tackle a quantization phenomenon affecting the pressure sensors.

3. The method of claim 1 wherein said MPC control architecture (400) is implemented by an MPC block (410) performing an estimation of the states of the controlled dynamic process by a Kalman Filter block (640).

4. The method of claim 3 wherein said estimation based on said Kalman Filter block (640) is applied to fluid level-side L of the boiler.

5. The method of claim 1 wherein the MPC control applied on pressure-side is **characterized by** a peculiar cost function having as sole objective the imposition of a particular profile for the fuel mass flow given by the following equation:

$$J(z_k) = \sum_{i=1}^{p} \left\{ \dot{m}_{fuel}(k+i|k) - \dot{m}_{fuel,REF}(k+i) \right\}^2$$

6. The method of claim 1 wherein said custom estimation relies on a backwards linear interpolation triggered by any change on the measured pressure value (P).

7. An industrial boiler (680) for producing steam at a measurable pressure P from a fluid to be heated, including:

    - at least a pressure sensor;

- at least a fluid level sensor;
- an electronic controller structured and programmed to implement an MPC control method according to claim 1.

8. The industrial boiler of claim 7 wherein said MPC control is implemented in said electronic controller by an MPC architecture (400) provided upstream of a couple of PI controllers (420, 430), one for the pressure (P) control and one for the fluid level (L) control.

9. The industrial boiler of claim 8 wherein said MPC control is applied on the pressure value (P) through a customised estimation algorithm to tackle a quantization phenomenon affecting the pressure sensors.

10. The industrial boiler of claim 8 wherein said MPC control architecture (400) is implemented by an MPC block (410) receiving as input at least the feedback value of the steam pressure (P).

**Patentansprüche**

1. Ein MPC-Regelungsverfahren für einen Industriekessel (680),

wobei mindestens einige variable Ausgangsparameter (P, L) durch eine überwachende kaskadenförmige MPC-Regelungsarchitektur (400) zur Optimierung des Kesselbetriebs geregelt werden, mindestens der vom Füllstandssensor erfasste Füllstand (L) der im Kessel zu erhitzenden Flüssigkeit und der Wert des Dampfdrucks (P), der vom Kessel 680 (450) erzeugt und von Drucksensoren erfasst wird,
wobei die MPC-Regelungsarchitektur (400) stromaufwärts von mehreren PI-Reglern (420, 430) liegt, einer für die Regelung des Drucks (P) und einer für die Regelung des Flüssigkeitsstands (L);
wobei die MPC-Regelungsarchitektur (400) durch einen MPC-Block (410) implementiert ist, der als Eingang mindestens den Rückkopplungswert des Dampfdrucks (P) empfängt;
wobei die MPC-Regelungsarchitektur (400) durch einen MPC-Block (410) implementiert ist, der als Eingang mindestens den Rückkopplungswert des Dampfdrucks (P) empfängt;
wobei der MPC-Block (410) als einen weiteren Eingang mindestens den Rückkopplungswert des Flüssigkeitsstands (L) empfängt; und
wobei die MPC-Regelungsarchitektur mindestens einen ersten Ausgang (O1) aufweist, der für das prädiktive Druckregelungsniveau vorgesehen ist und mindestens einen zweiten Ausgang (02), der für die prädiktive Flüssigkeitsniveauregelung vorgesehen ist.

2. Verfahren nach Anspruch 1, wobei die MPC-Regelung durch einen angepassten Schätzalgorithmus auf den Druckwert (P) angewendet wird, um ein Quantisierungsphänomen zu bekämpfen, das die Drucksensoren beeinträchtigt.

3. Verfahren nach Anspruch 1, wobei die MPC-Regelungsarchitektur (400) durch einen MPC-Block (410) implementiert wird, der eine Schätzung der Zustände des geregelten dynamischen Prozesses durch einen Kalman-Filterblock (640) durchführt.

4. Verfahren nach Anspruch 3, wobei die auf dem Kalman-Filterblock (640) basierende Schätzung auf die Seite des Flüssigkeitsstands L des Kessels angewendet wird.

5. Verfahren nach Anspruch 1, wobei die auf der Druckseite angewendete MPC-Regelung durch eine besondere Kostenfunktion gekennzeichnet ist, deren einziges Ziel die Festlegung eines bestimmten Profils für den Brennstoffmassenstrom ist, das durch die folgende Gleichung gegeben ist:

$$J(z_k) = \sum_{i=1}^{p} \left\{ \dot{m}_{fuel}(k+i|k) - \dot{m}_{fuel,REF}(k+i) \right\}^2$$

6. Verfahren nach Anspruch 1, wobei die angepasste Schätzung auf einer linearen Rückwärtsinterpolation beruht, die durch jegliche Änderung des gemessenen Druckwerts (P) ausgelöst wird.

7. Ein Industriekessel (680) zur Erzeugung von Dampf mit einem messbaren Druck P aus einer zu erhitzenden Flüssigkeit, beinhaltend:

- mindestens einen Drucksensor;
- mindestens einen Flüssigkeitsstandsensor;
- eine elektronische Regelung, die so strukturiert und programmiert ist, dass sie ein MPC-Regelungsverfahren gemäß Anspruch 1 implementiert.

8. Industriekessel nach Anspruch 7, wobei die MPC-Regelung in der elektronischen Regelung durch eine MPC-Architektur (400) implementiert ist, die stromaufwärts von mehreren PI-Reglern (420, 430) liegt, einer für die Regelung des Drucks (P) und einer für die Regelung des Flüssigkeitsstands (L).

9. Industriekessel nach Anspruch 8, wobei die MPC-Regelung über einen angepassten Schätzalgorithmus auf den Druckwert (P) angewendet wird, um ein Quantisierungsphänomen zu bekämpfen, das die Drucksensoren beeinträchtigt.

10. Industriekessel nach Anspruch 8, wobei die MPC-Regelungsarchitektur (400) durch einen MPC-Block (410) implementiert ist, der als Eingabe mindestens den Rückkopplungswert des Dampfdrucks (P) empfängt.

## Revendications

1. Un procédé de commande MPC pour une chaudière industrielle (680) dans lequel au moins deux paramètres de sortie variables (P, L) sont commandés par une architecture de commande MPC en cascade de supervision (400) pour optimiser le fonctionnement de la chaudière, au moins le niveau (L) capté par capteur de niveau du fluide à chauffer dans la chaudière et la valeur de la pression de vapeur (P) produite par la chaudière 680 (450) et captée par des capteurs de pression, ladite architecture de commande MPC (400) étant prévue en amont d'une paire de dispositifs de commande PI (420, 430), un pour la commande de la pression (P) et un pour la commande du niveau de fluide (L) ; ladite architecture de commande MPC (400) est mise en oeuvre par un bloc MPC (410) recevant en tant qu'entrée au moins la valeur de retour de la pression de vapeur (P) ; ladite architecture de commande MPC (400) est mise en oeuvre par un bloc MPC (410) recevant en tant qu'entrée au moins la valeur de retour de la pression de vapeur (P) ; ledit bloc MPC (410) recevoir en tant qu'entrée supplémentaire au moins la valeur de retour du niveau de fluide (L) ; et ladite architecture de commande MPC fournit au moins une première sortie (O1) dédiée au niveau de commande prédictif de la pression et au moins une deuxième sortie (O2) dédiée à la commande prédictive du niveau de fluide.

2. Le procédé selon la revendication 1, dans lequel ladite commande MPC est appliquée sur la valeur de pression (P) au moyen d'un algorithme d'estimation personnalisé pour lutter contre un phénomène de quantification affectant les capteurs de pression.

3. Le procédé selon la revendication 1, dans lequel ladite architecture de commande MPC (400) est mise en oeuvre par un bloc MPC (410) réalisant une estimation des états du processus dynamique commandé par un bloc Filtre de Kalman (640).

4. Le procédé selon la revendication 3, dans lequel ladite estimation basée sur ledit bloc de filtre de Kalman (640) est appliquée au côté niveau de fluide L de la chaudière.

5. Le procédé selon la revendication 1, dans lequel la commande MPC appliquée sur le côté pression est **caractérisé par** une fonction de coût particulière ayant pour seul objectif l'imposition d'un profil particulier pour le débit massique de carburant donné par l'équation suivante :

$$J(z_k) = \sum_{i=1}^{p} \left\{ \dot{m}_{fuel}(k+i|k) - \dot{m}_{fuel,REF}(k+i) \right\}^2$$

6. Le procédé selon la revendication 1, dans lequel ladite estimation personnalisée repose sur une interpolation linéaire vers l'arrière déclenchée par tout changement de la valeur de pression mesurée (P).

7. Une chaudière industrielle (680) pour produire de la vapeur à une pression mesurable P à partir d'un fluide à chauffer, comprenant :

- au moins un capteur de pression ;
- au moins un capteur de niveau de fluide ;
- un dispositif de commande électronique structuré et programmé pour mettre en oeuvre un procédé de commande MPC selon la revendication 1.

8. La chaudière industrielle selon la revendication 7, dans laquelle ladite commande MPC est mise en oeuvre dans ledit dispositif de commande électronique par une architecture MPC (400) prévue en amont d'une paire de dispositifs de commande PI (420, 430), un pour la commande de la pression (P) et un pour la commande du niveau de fluide (L).

9. La chaudière industrielle selon la revendication 8, dans laquelle ladite commande MPC est appliquée sur la valeur de pression (P) au moyen d'un algorithme d'estimation personnalisé pour lutter contre un phénomène de quantification affectant les capteurs de pression.

10. La chaudière industrielle selon la revendication 8, dans laquelle ladite architecture de commande MPC (400) est mise en oeuvre par un bloc MPC (410) recevant en tant qu'entrée au moins la valeur de retour de la pression de vapeur (P).

**FIG. 1 – PRIOR ART**

**FIG. 2 – PRIOR ART**

**FIG. 3**

**FIG. 4**

**FIG. 5**

610    600

IF $P_{Meas}$ has changed

Event-based backwards linear
interpolation estimation                    620

p

k-1        k        time

$\dot{m}_{fuel,EQUILIBRIUM}$

Computing the optimal
fuel mass flow profile                       630

$\dot{m}_{fuel,OPTIMAL\_PROFILE}$

KALMAN FILTER:
Estimation of the level-
side model states            640

States estimation            650

MPC CONTROLLER

Pressure-side:
• Model of the pressure PI controller
• Pressure-side cost function

Level-side:
• Model of the level PI controller
• Level-side cost function
• Mode of the level-side boiler dynamics

660    Pressure modified
set-point            O1

Level modified set-
point            O2            670

Pressure PI controller

Level PI controller

Fuel mass flow

Feedwater

BOILER            680

Pressure measured (quantized)

Level measured (noisy)

**FIG. 6**

**EP 3 889 696 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160320058 A1

- US 2016209031 A1

**Non-patent literature cited in the description**

- **PONGSORN KEADTIPOD ; DAVID BANJERD-PONGCHAI.** *Design of Supervisory Cascade Model Predictive Control for Industrial Boilers,* November 2016